Europäisches Patentamt

European Patent Office

Office européen des brevets

(11) Numéro de publication: **0 146 091**
**B1**

## FASCICULE DE BREVET EUROPEEN

(45) Date de publication du fascicule du brevet: **04.04.90**

(51) Int. Cl.⁵: **G 01 N 27/90**

(21) Numéro de dépôt: **84114926.3**

(22) Date de dépôt: **07.12.84**

(54) **Méthode et système de test non destructif à courants de Foucault utilisant un balayage en fréquences.**

(30) Priorité: **16.12.83 CA 443558**

(43) Date de publication de la demande:
**26.06.85 Bulletin 85/26**

(45) Mention de la délivrance du brevet:
**04.04.90 Bulletin 90/14**

(84) Etats contractants désignés:
**AT BE CH DE FR GB IT LI LU NL SE**

(56) Documents cités:
**DE-A-2 641 798**
**FR-A-2 324 003**
**US-A-3 697 868**

(73) Titulaire: **INTERCONTROLE**
**4 à 10 Place Vauban Silic 433**
**F-94583 Rungis Cedex (FR)**

(72) Inventeur: **Durou, Gérard**
**709 rue Seigneuriale**
**Beauport (Québec) (CA)**
Inventeur: **Samson, Rock**
**3180 Sévigny, 10**
**Québec (Québec) (AU)**

(74) Mandataire: **Pottier, Pierre Société BREVATOME et al**
**25, Rue de Ponthieu**
**F-75008 Paris (FR)**

EP 0 146 091 B1

Courier Press, Leamington Spa, England.

**Description**

La présente invention est relative à un procédé et un dispositif de test non destructif à courants de Foucault.

La présente invention utilise donc la technique d'essais ou de test à courants de Foucault, qui est bien connue dans les milieux scientifiques. Cette technique d'essais ou de test non destructif à courants de Foucault est largement utilisée dans l'industrie de la métallurgie, principalement pour le contrôle de la qualité. Les domaines industriels d'application se situent par exemple dans l'industrie de l'aeronautique, de la mécanique de précision, et des placages, et dans l'industrie nucléaire et militaire.

On connaît du brevet des Etats-Unis No 3.478.263 (HENTSCHEL) du 11 novembre 1969, un système de test non destructif à courants de Foucault muni d'un générateur de fréquences variables produisant un signal qui alimente une sonde générant un champ magnétique induisant des courants de Foucault dans une pièce métallique placée à proximité, ce champ magnétique inducteur étant modifié par les courants de Foucault induits. La sonde génère aussi un signal représentatif du champ magnétique modifié qui est reçu par un circuit avec un autre signal provenant du générateur et ayant la même fréquence que le signal injecté dans la sonde, ce circuit qui est muni d'un indicateur étant spécialement adapté pour permettre à l'opérateur d'ajuster le générateur variable à une fréquence la plus appropriée compte tenu des exigences de l'utilisation prévue. Ce système ne permet cependant pas d'échantillonner des variables du signal représentatif du champ modifié généré par la sonde à un grand nombre de fréquences afin de recueillir une plus grande quantité d'informations pertinentes relatives à la structure de la pièce soumise à un test non destructif à courants de Foucault, pour donner ainsi au système une plus grande versatilité, puisque les informations utilisees pour le test sont limitées à celles prélevées à la fréquence sélectionnée par l'opérateur.

D'autres systèmes de test non destructif à courants de Foucault sont décrits dans les brevets des Etats-Unis Nos 4.059.795 (MORDWINKIN) du 22 novembre 1977, 4.230.987 (MORDWINKIN) du 28 octobre 1980, 4.303.885 (DAVIS et al.) du 1er décembre 1981, 4.237.419 (TORNBLOM et al.) du 2 décembre 1980, 4.086.527 (CADOT) du 25 avril 1978, et 4.207.520 (FLORA et al.) du 10 juin 1980. Ces différents systèmes de test utilisent quelques fréquences discrètes pour effectuer des tests sur des pièces à analyser. Tous ces systèmes sont évidemment limités à leurs différentes fréquences d'opération qui sont habituellement de nombre plutôt restreint. De plus, la gamme de ces fréquences est dans la plupart des cas choisie en fonction d'une application particulière et est souvent peu étendue. Ces systèmes de test non destructif à courants de Foucault ne permettent donc pas une versatilité d'utilisation qui serait rendue possible par un balayage en fréquences du signal injecté dans la sonde, pouvant être effectué à l'intérieur d'une gamme étendue de fréquences, ce qui permettrait d'obtenir un plus grand nombre d'informations sur une pièce métallique soumise au champ magnétique généré par la sonde et modifié par des courants de Foucault induits dans cette pièce, l'analyse étant bien entendu effectuée sur ce champ magnétique modifié.

La présente invention a pour but de perfectionner ces appareils. Elle propose un appareil capable de modifier la fréquence du signal d'excitation pour obtenir un plus grand nombre d'informations sur la structure de la pièce à contrôler et permettre le choix le mieux approprié de la fréquence de travail.

A cette fin, le dispositif de test non destructif à courants de Foucault comprend d'abord, comme dans l'art antérieur:

un générateur sinusoïdal délivrant un signal d'excitation à une certaine fréquence réglable,

une sonde comprenant un enroulement apte à recevoir une pièce à tester, cet enroulement recevant ledit signal d'excitation, cette sonde délivrant un signal de mesure à ladite fréquence,

des moyens pour mesurer la différence de phase entre le signal d'excitation et le signal de mesure,

des moyens pour mesurer l'amplitude du signal de mesure;

selon l'invention, ce dispositif est caractérisé en ce qu'il comprend en outre:

un convertisseur analogique/numérique ayant une entrée reliée au détecteur de phase et au moyen de mesure de l'amplitude,

un microordinateur relié au convertisseur et au générateur sinusoïdal et associé à des moyens de commande d'affichage, ce microordinateur étant apte avec un logiciel de travail approprié à:

modifier la fréquence du signal engendré par le générateur sinusoïdal pour balayer une certaine plage de fréquences,

échantillonner les signaux délivrés par les moyens de mesure de la différence de phase et le moyen de mesure de l'amplitude du signal, cet échantillonnage s'effectuant pour différentes valeurs de la fréquence du signal engendré par le générateur,

mémoriser tous ces èchantillons pour toute la plage balayée à la fois pour une première mesurer, dite de référence, effectuée en plaçant une pièce de référence dans la sonde et pour une seconde mesure, dite de test, effectuée en plaçant une pièce de test dans la sonde, cette pièce de test possèdant un certain paramètre à évaluer,

déterminer la fréquence de la bande balayée pour laquelle la mesure de référence et la mesure de test présentent la différence la plus accentuée,

réitérer éventuellement cette détermination pour d'autres pièces test possédant d'autres types de paramètres à évaluer et déterminer, à chaque fois, la valeur de la fréquence la mieux appropriée pour mesurer chaque paramètre,

régler alors le générateur sur l'une des fréquences ainsi déterminées pour effectuer des tests subséquents sur d'autres pièces censées présenter l'un desdits paramètres.

Les avantages et autres caractéristiques de la présente invention apparaîtront à la lecture de la description qui suit d'un mode de réalisation préféré de celle-ci, donnée à titre d'exemple non limitatif seulement avec référence aux dessins annexés dans lesquels:

La Figure 1 est un diagramme en bloc illustrant un mode de réalisation du système de test non destructif à courants de Foucault selon l'invention; et

Les Figures 2a), 2b) et 2c) montrent trois modes de réalisation d'une sonde faisant partie du dispositif de test non destructif à courants de Foucault de la Figure 1.

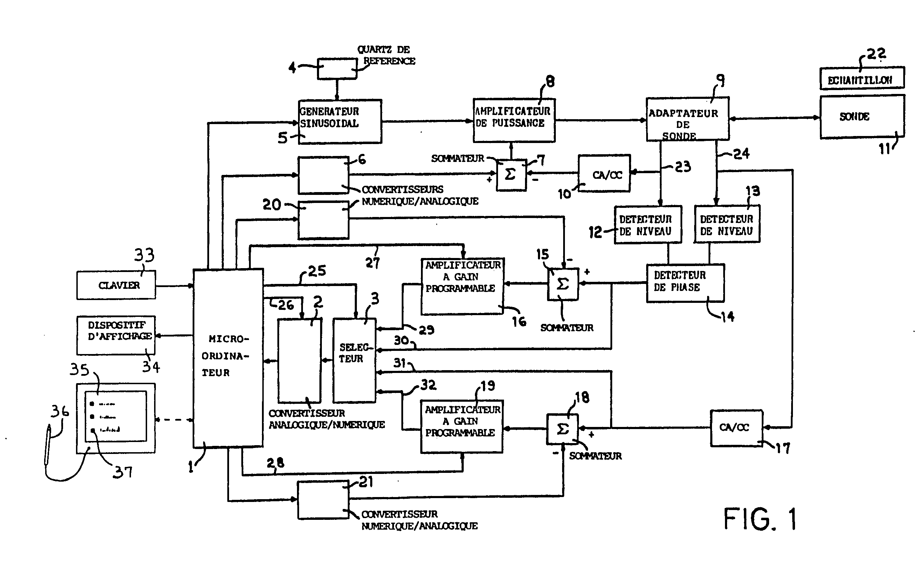

Tel qu'illustré sur la Figure 1, le dispositif de test non destructif à courants de Foucault comporte un micro-ordinateur 1 qui contrôle automatiquement toutes les fonctions et l'ensemble des ajustements de ce dispositif de test non destructif. Le micro-ordinateur 1 est lui-même contrôlé par un clavier alphanumérique 33 standard, ou par un autre type de clavier plus petit selon les besoins.

Un générateur sinusoïdal 5, qui peut être du type faible distorsion ayant sa fréquence bloquée, d'une manière connue de l'homme de l'art, sur un quartz de référence 4 à l'aide d'un asservissement en phase, est spécialement adapté pour générer à sa sortie un signal sinusoïdal balayé en fréquences à l'intérieur d'une gamme globale de fréquences qui peut s'étendre par exemple de 5 Hz à 6 MHz selon les besoins. La fréquence du signal à la sortie du générateur 5 est contrôlée par le micro-ordinateur 1. Une gamme de fréquences moins large peut également être sélectionnée à l'intérieur de cette gamme globale de fréquences selon les exigences d'une application donnée sur le clavier 33 du micro-ordinateur 1 qui se charge d'agir sur le générateur 5 pour que le signal produit par celui-ci soit balayé en fréquences d'une fréquence inférieure de cette gamme de fréquences sélectionnée à une fréquence supérieure de celle-ci. La structure du générateur 5 peut avantageusement être sélectionnée pour lui permettre d'être manoeuvré par le micro-ordinateur 1 afin de générer un signal ayant une fréquence déterminée, cette fréquence pouvant être changée par le micro-ordinateur 1 afin de générer un signal soumis à un balayage de fréquences par étapes de fréquences, les étapes de fréquences passant par chacune des fréquences du grand nombre de fréquences auxquelles le dispositif prélève des échantillons tel que décrit ci-après. La structure du générateur 5 peut également être sélectionnée pour que le balayage en fréquences de son signal de sortie soit continu, la fréquence de ce signal pouvant cependant être, sous le contrôle du microordinateur 1, bloquée successivement à chacune des fréquences auxquelles le micro-ordinateur prélève des échantillons.

Un amplificateur de puissance 8 à large bande passante est prévu pour amplifier le signal à la sortie du générateur 5. Cet amplificateur 8 est muni d'un circuit pour contrôler en amplitude le signal (tension) délivré par cet amplificateur en réponse à un signal de sortie d'un sommateur 7. Le niveau de tension du signal à la sortie de l'amplificateur 8 est ajusté à partir d'un signal de contrôle émis par le micro-ordinateur 1 et transmis par l'intermédiaire d'un convertisseur numérique/analogique 6 à l'entrée positive du sommateur 7, et ce niveau de tension est conservé constant sur toute la gamme de fréquences balayée grâce à une boucle de rétroaction formée par un convertisseur courant alternatif/courant continu (CA/CC) 10 et par le sommateur 7, pour une alimentation en tension constante d'une sonde 11 à travers un adaptateur de sonde 9. Le sommateur 7 soustrait donc d'un signal à courant continu représentatif du signal de contrôle émis par le micro-ordinateur 1 un signal à courant continu produit par le convertisseur 10 et représentatif du niveau de tension du signal délivré par l'amplificateur 8 et reçu par ce convertisseur 10 à travers l'adaptateur de sonde 9 et une liaison 23.

L'alimentation de la sonde 11 pourrait également s'effectuer en courant constant si le signal de contrôle ci-haut mentionné émis par le micro-ordinateur 1 était représentatif du courant d'alimentation désiré de la sonde 11, et si la rétroaction à travers le convertisseur 10 et le sommateur 7 s'effectuait à partir d'une mesure du courant délivré par l'amplificateur 8.

L'adaptateur de sonde 9 a de préférence une structure capable d'accepter plusieurs types de branchement: soit en pont, soit en transformateur différentiel, etc. L'adaptateur 9 peut également comprendre des moyens pour permettre l'utilisation de sondes actives (effet Hall).

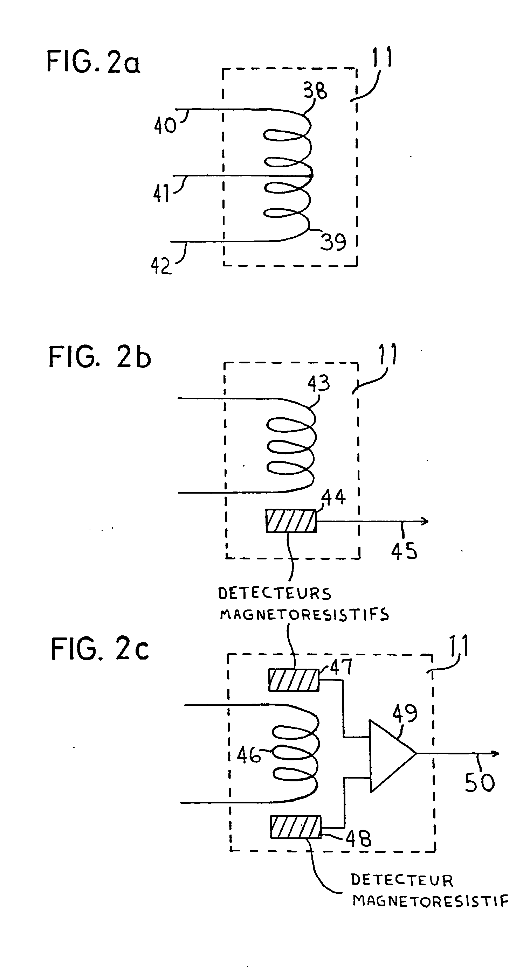

La sonde 11 peut, telle qu'illustrée par exemple sur la Figure 2a), être formée d'une bobine, une première moitié 38 de cette bobine étant alimentée par l'intermédiaire de ses bornes 40 et 41 par le signal à la sortie de l'amplificateur 8 de la Figure 1 pour ainsi émettre un champ magnétique alternatif inducteur à l'intérieur duquel est placé un échantillon ou pièce 22 illustré à la Figure 1, ce champ magnétique inducteur induisant des courants de Foucault à l'intérieur de la pièce ou échantillon 22, et étant modifié par ces courants de Foucault comme il sera explicité plus en détail ci-après. La seconde moitié 39 de la bobine détecte le champ magnétique modifié et génère entre ses bornes 41 et 42 une tension alternative représentative de ce champ magnétique modifié.

La Figure 2b) montre un autre exemple de réalisation de la sonde 11 de la Figure 1. Une bobine 43 est alimentée par le signal à la sortie de l'amplificateur 8 pour produire le champ magnétique alternatif inducteur à l'intérieur duquel est placé l'échantillon ou pièce 22. Le champ magnétique alternatif modifié par les courants de Foucault induits dans la pièce ou échantillon 22 est détecté par un détecteur magnétorésistif 44 qui délivre à sa sortie 45 un signal alternatif (tension) représentatif du champ magnétique modifié en question. Le montage de la Figure 2b) fonctionne donc en absolu.

Un tel détecteur magnétorésistif a une résistivité qui change avec le champ magnétique auquel il est soumis, et permet par conséquent de détecter les variations d'un champ magnétique. De plus, ce genre de détecteur est très sensible et peut être utilisé à l'intérieur d'une large gamme de fréquences et de températures, ce qui convient très bien pour une application à la présente invention. Le détecteur magnétorésistif 44 peut être constitué par celui fabriqué par la compagnie PHILIPS et désigné sous le numéro de référence "KMZ 10".

Par ailleurs, il doit être noté que l'utilisation de détecteurs magnétorésistifs tels que 44 permet de réduire considérablement le volume de la sonde 11 et en conséquence de concevoir des sondes basses fréquences (quelques Hertz à quelques centaines de kHz) ayant un volume réduit. De telles sondes sont grandement utiles pour effectuer un contrôle de la qualité sur des pièces en acier trempé, par exemple des engrenages, et sur des pièces en matériaux ferromagnétiques.

La Figure 2c) montre un dernier mode de réalisation de la sonde 11. Une bobine 46 est alimentée à partir du signal à la sortie de l'amplificateur 8 de la Figure 1 pour générer le champ magnétique alternatif inducteur produisant les courants de Foucault dans l'échantillon ou pièce 22 de la Figure 1. Le champ magnétique modifié par les courants de Foucault induits est détecté par deux détecteurs magnétorésistifs 47 et 48 du même type que le détecteur 44 et disposés aux deux extrémités de la bobine 46 selon un montage différentiel. Un amplificateur différentiel 49 reçoit sur ses deux entrées les signaux de sortie respectifs des détecteurs 47 et 48 et délivre à sa sortie 50 un signal alternatif (tension) représentatif du champ magnétique modifié par les courants de Foucault induits.

Il est évident que le montage de la Figure 2c) donne à la sonde 11 une plus grande sensibilité aux variations du champ magnétique modifié et la rend moins sensible à l'effet de distance causé par un rapprochement ou un éloignement de la sonde 11 par rapport à l'échantillon ou pièce 22 de la Figure 1.

Tel que déjà mentionné avec référence à la Figure 1, le signal alternatif (tension) à la sortie de l'amplificateur 8 est délivré sur une liaison 23 par l'intermédiaire de l'adaptateur de sonde 9. De la même façon, la tension alternative représentative du champ magnétique modifié générée à la sortie de la sonde 11 est délivrée sur une liaison 24 par l'intermédiaire de l'adaptateur de sonde 9.

Deux détecteurs de niveau 12 et 13 transforment en ondes carrées les tensions alternatives sinusoïdales présentes sur les liaisons 23 et 24, respectivement, dans le but de mesurer à l'aide d'un détecteur de phase 14, la différence de phase entre la tension alternative sur la liaison 23 provenant de la sortie de l'amplificateur 8 et la tension alternative sur la liaison 24 provenant de la sonde 11. Le détecteur de phase 14 délivre sur sa sortie par exemple une tension continue qui varie linéairement en fonction de l'écart angulaire entre les tensions ci-haut mentionnées présentes sur les liaisons 23 et 24.

Un convertisseur courant alternatif/courant continu 17 génère une tension continue représentative de l'amplitude de la tension alternative présente sur la liaison 24 et provenant de la sonde 11.

Un sélecteur 3 et un convertisseur analogique/ numérique 2 tous deux contrôlés par le micro-ordinateur 1 à travers des liaisons 25 et 26, respectivement, permettent au micro-ordinateur d'échantillonner à un grand nombre de fréquences du signal soumis à un balayage en fréquences à la sortie du générateur 5 dont il contrôle bien entendu la fréquence comme décrit précédemment, le signal à la sortie 29 d'un amplificateur à gain programmable 16 et/ou la tension continue à la sortie du détecteur de phase 14 à travers une liaison 30, ainsi que la tension continue à la sortie du convertisseur 17 à travers une liaison 31 et/ou le signal à la sortie 32 d'un amplificateur à gain programmable 19. Le micro-ordinateur 1 comprend bien entendu des mémoires vives permettant de mémoriser des données échantillonnées relatives au test avant leur traitement par le micro-ordinateur 1.

Le dispositif de test non destructif à courant de Foucault comprend une boucle de rétroaction formée par un sommateur 15 qui soustrait de la tension continue à la sortie du détecteur de phase 14 une tension continue générée par un convertisseur numérique/analogique 20 en réponse à un signal numérique délivré par le micro-ordinateur 1, et par l'amplificateur à gain programmable 16 ayant un gain contrôlé par le micro-ordinateur 1 par l'intermédiaire d'une liaison 27 et qui reçoit en entrée une tension continue produite par le sommateur 15.

Le dispositif de test comporte une autre boucle de rétroaction formée par un sommateur 18 qui soustrait de la tension continue à la sortie du convertisseur 17 une tension continue générée par un convertisseur numérique/analogique 21 en réponse à un signal numérique délivré par le micro-ordinateur 1, et par l'amplificateur à gain programmable 19 ayant un gain contrôlé par le micro-ordinateur 1 par l'intermédiaire d'une liaison 28 et qui reçoit en entrée une tension continue produite par le sommateur 18.

Les deux boucles de rétroaction ont pour fonction d'augmenter la sensibilité dans l'échantillonnage effectué par le dispositif de test non destructif afin de détecter de petites variations d'amplitude du signal de sortie de la sonde et de la différence de phase détectée par le détecteur 14 d'une pièce testée à l'autre.

Pour réaliser cette fonction, c'est-à-dire augmenter la sensibilité du dispositif à courants de Foucault, à l'aide des deux boucles de contre-réaction ci-haut décrites, le micro-ordinateur 1 effectue les opérations suivantes.

Il lit la tension à la sortie du détecteur de phase 14 (ou du convertisseur 17) à une première fréquence de la gamme balayée, après avoir bloqué le générateur sinusoïdal 5 à cette fréquence, à travers le sélecteur 3 et le convertisseur 2 et ramène cette tension au convertisseur numérique/analogique 20 (ou 21). Il en résulte donc à la sortie du sommateur 15 (ou 18) une tension continue presque nulle. L'amplificateur à gain programmable 16 (ou 19) amplifie alors la tension continue à la sortie du sommateur 15 (ou 18).

Il lit la tension amplifiée à la sortie de l'amplificateur 16 (ou 19) sous forme numérique à la sortie du convertisseur analogique/numérique 2, cette valeur numérique correspondant à la tension de retour et étant placée en mémoire avec une lecture de la différence à la sortie du sommateur 15 (ou 18) qui a été amplifiée par l'amplificateur 16 (ou 19).

Il agit alors sur le générateur 5 pour accroître la fréquence du signal injecté dans la sonde de façon à couvrir toute la plage de fréquences balayées. Ceci permet aussi évidemment au micro-ordinateur d'échantillonner l'amplitude du signal à la sortie de la sonde et l'écart angulaire à la sortie du détecteur 14 à un grand nombre de fréquences.

Comme il apparaît de la description ci-haut, le dispositif de test effectue, sous le contrôle du micro-ordinateur 1, les mêmes opérations pour la tension continue à la sortie du convertisseur 17, qui est représentative de l'amplitude de la tension sinusoïdale sur la liaison 24, et pour la tension continue à la sortie du détecteur 14, qui est représentative de l'écart angulaire entre les tensions sinusoïdales sur les liaisons 23 et 24, à l'aide des deux boucles de contre-réaction ci-haut définies.

La prise en considération de l'augmentation de sensibilité s'effectue à l'aide d'un traitement approprié des valeurs mises en mémoire par le logiciel du microordinateur.

Le principe de fonctionnement du dispositif de test non destructif àcourants de Foucault tel que décrit précédemment avec référence à la Figure 1 sera maintenant explicité plus en détails.

Il est bien connu que le principe fondamental de la technique de test par courants de Foucault consiste à exciter une bobine ou autre forme géométrique, à l'aide d'un générateur sinusoïdal, puis à placer à proximité de cette bobine une pièce de métal ou d'alliage.

La sonde peut, comme mentionné plus haut, comprendre une bobine émettrice qui est soumise à un courant donné délivré par le générateur sinusoïdal pour creer autour d'elle un champ magnétique inducteur qui lui est propre.

Si une pièce de métal ou d'alliage se trouve dans la zone de radiation de la bobine émettrice, le champ magnétique inducteur généré par cette bobine induit des courants dans cette pièce de métal ou d'alliage (courants de Foucault). Un phénomène inverse se produit alors à partir des courants induits ou courants de Foucault. Plus particulièrement, ces courants de Foucault créent à leur tour un champ magnétique qui s'oppose au champ magnétique inducteur. Il en résulte donc une diminution du champ global, ceci entraînant une variation d'impédance de la sonde.

Ce phénomène entraîne donc une modification du module et de l'angle électrique ou phase de la tension représentative du champ magnétique alternatif modifié généré par la sonde par rapport au module et à l'angle électrique de la tension à la sortie du générateur sinusoïdal. C'est justement cette modification qu'analyse le dispositif de test à courants de Foucault pour ainsi en déduire un résultat de test positif ou négatif.

Il y a plusieurs paramètres qui peuvent influencer les courants de Foucault comme par exemple: la conductivité électrique du métal ou de l'alliage de la pièce à tester, le couplage entre la sonde et la pièce à tester la fréquence utilisée lors du test, l'épaisseur de la pièce de métal ou d'alliage à tester, la forme de la pièce, les propriétés intrinsèques de la sonde, les fissures et autres défauts de la pièce de métal ou d'alliage, et la perméabilité du métal ou de l'alliage de la pièce. Evidemment, on peut désirer vérifier plusieurs de ces paramètres durant un même test, ce que permet le dispositif de test non destructif selon l'invention, tel qu'il apparaîtra à la lecture de la description qui suit.

Le dispositif de test selon la présente invention, qui peut effectuer un balayage en fréquences du signal sinusoïdal qui est injecté dans la sonde ou les sondes utilisées, à donc l'avantage de permettre une analyse de plusieurs paramètres variant simultanément dans un même test, ce qui est très difficile, voire même impossible, pour les appareils de l'art antérieur ne générant que quelques fréquences.

Ce balayage peut s'étendre, tel que déjà mentionné de 5 Hz à 6 MHz, avec par exemple 256 étapes de fréquences prédéterminées où le micro-ordinateur prend des mesures ou échantillons. Evidemment, le nombre d'étapes de fréquences peut être varié à volonté par opération du clavier 33 selon le niveau de précision désiré ou selon l'utilisation du système de test non destructif à courants de Foucault.

Tous les contrôles et ajustements relatifs au test sont effectués par le micro-ordinateur 1 lui-même contrôlé, tel que déjà mentionné, par un clavier alphanumérique standard 33, ou par un autre type de clavier plus petit suivant les besoins. Bien que les résultats puissent être affichés de plusieurs façons, par un dispositif d'affichage 34 relié au micro-ordinateur 1, une façon avantageuse réside dans l'affichage par le micro-ordinateur 1 des résultats des tests sous forme de graphique sur un écran vidéo faisant partie du dispositif 34.

Cet affichage des résultats sous forme graphique peut s'effectuer de plusieurs façons: comme par exemple sous forme de graphique montrant par exemple l'amplitude de la tension sur la liaison 24 et la différence de la phase détectée par le détecteur 14 qui sont échantillonnées par le micro-ordinateur 1, en fonction de la fréquence, sous forme de graphique de l'amplitude et de la différence de phase en fonction de la position ou pénétration des courants de Foucault dans la pièce ou échantillon testé 22, ou encore dans le plan polaire: amplitude en fonction de la différence de phase.

Le premier mode d'affichage est très visuel et ceci grâce au principe du balayage de fréquences inhérent au système, qui permet d'effectuer des tests beaucoup plus complets comme il ressortira de la description qui suit.

Avant que cet affichage puisse être effectué, les données échantillonnées relatives au test sont mises en mémoire par le micro-ordinateur 1, puis par la suite sont traitées par celui-ci et affichées sur l'écran vidéo du dispositif 34.

Il sera décrit ci-après deux exemples d'utilisation du systèmes de test à courants de Foucault selon l'invention.

Un premier exemple consiste en une procédure pour extraire à chaque test un certain nombre de paramètres sélectionnés.

Le micro-ordinateur 1 peut sélectionner lui-même, avec l'introduction au préalable d'un logiciel de travail approprié, et après des essais préliminaires une fréquence pour chaque paramètre de la pièce à tester que l'on désire vérifier et qui permet d'obtenir une très bonne information relative à ce paramètre.

Comme l'effet de pelliculaire des courants de Foucault a pour effet de modifier l'angle électrique et le module de la tension électrique recueillis pour un même paramètre, par exemple l'épaisseur d'une couche de métal ou autre matériau, et ceci à des fréquences différentes, le balayage en fréquences permet ainsi d'extraire durant un test un plus grand nombre d'informations pertinentes à ce paramètre et pour plusieurs paramètres variant simultanément.

Dans une première partie du test, un balayage en fréquences est effectué sur un échantillon ou pièce de référence n'ayant aucun défaut. Les informations obtenues sont alors introduites en mémoire par le micro-ordinateur.

Par la suite, un second balayage en fréquences est effectué sur un échantillon ou une pièce semblable à la pièce de référence ayant un premier paramètre à extraire qui diffère de la pièce de référence, puis un autre balayage en fréquences est effectué sur un échantillon ou pièce semblable à la pièce de référence ayant un second paramètre à extraire qui diffère aussi de la pièce de référence, et ainsi de suite, dépendant du nombre de paramètres que l'on désire vérifier.

Tous les échantillons d'amplitude et de différence de phase prélevés lors de ces différents balayages en fréquences sont alors placés en mémoire par le micro-ordinateur 1.

Connaissant ces données, le micro-ordinateur 1 compose les vecteurs obtenus, ceci pour en extraire une fréquence pour laquelle une variation de la différence de phase et de l'amplitude est la plus importante pour un certain paramètre à tester en comparant les échantillons prélevés lors du balayage en fréquences sur la pièce de référence avec les échantillons prélevés lors du balayage en fréquences sur la pièce représentative du paramètre en question. Evidemment, une fréquence est extraite pour chacun des paramètres que l'on désire vérifier. Il y a donc conservation d'une fréquence par paramètre.

Durant cette opération, le micro-ordinateur effectue une rotation d'angle par logiciel de tous les vecteurs en prenant soin durant le traitement des échantillons prélevés, de placer en opposition de phase les vecteurs des paramètres indésirables (180°) de façon à annuler leurs effets et ajuste en conséquence toutes les amplitudes. Les paramètres indésirables peuvent être par exemple l'espacement entre la sonde 11 et la pièce ou échantillon à tester 22, la présence d'un support, etc. et peuvent également faire l'objet d'essais préliminaires pour déterminer leurs effets sur les tests.

Cette fonction terminée, le système de test non destructif à courants de Foucault n'aura plus lors de tests subséquents, qu'à traiter les fréquences qui auront été retenues selon le nombre de paramètres à vérifier pour vérifier la qualité des pièces et acquérir ainsi une plus grande vitesse d'acquisition puisque le générateur 5 ne génère plus que ces différentes fréquences, le micro-ordinateur 1 ne prélève et mémorise des échantillons qu'à ces fréquences, et le micro-ordinateur a donc moins d'échantillons à traiter. Le système peut donc détecter rapidement et efficacement des défauts dans les pièces correspondant aux paramètres retenus, par exemple la présence de fissures et autres défauts de surface et les variations au niveau de la microstructure, en comparant les échantillons prélevés lors du balayage sur la pièce de référence et lors d'un test subséquent sur une autre pièce pour détecter les effets causés par ces défauts lorsqu'ils sont présents dans cette autre pièce sur les courants de Foucault.

Alternativement, en affichant sur le dispositif 34 la différence entre les échantillons qu'il prélève et mémorise lors du balayage en fréquences sur la pièce de référence et lors d'un test subséquent sur une autre pièce aux différentes fréquences retenues ou en affichant les échantillons prélevés aux différentes fréquences retenues lors du balayage sur la pièce de référence et lors d'un test subséquent sur une autre pièce, le micro-ordinateur peut permettre à l'opérateur de déterminer si les paramètres à évaluer sont présents ou non dans la pièce testée lors du test subséquent.

Un autre phénomène physique intéressant avec les courants de Foucault, c'est que la profondeur de pénétration de ces courants de Foucault est fonction de la fréquence utilisée.

Ce phénomène est représenté par l'équation suivante:

$$\delta = \frac{1}{\sqrt{\pi f \mu \sigma}}$$

$\delta$ = Profondeur de pénétration (ou atténuation)
$f$ = Fréquence en Hz du signal appliqué à la sonde

$\mu$ = Perméabilité du matériau de la pièce à tester

$\sigma$ = Conductivité du matériau de la pièce à tester.

Le balayage en fréquences effectué par le dispositif de test non destructif selon l'invention permet donc aussi de mesurer facilement les variations d'épaisseur de différentes couches, par exemple des placages, des cémentations ou autres.

Un second exemple décrit ci-après d'utilisation du dispositif de test selon l'invention consiste en une procédure pour déterminer l'épaisseur des placages.

Dans ce cas, on sélectionne sur le clavier du microordinateur une gamme de fréquences de balayage déterminée théoriquement et qui commence à une fréquence telle que la pénétration des courants de Foucault soit supérieure à l'épaisseur à mesurer, et qui se rend à une valeur de fréquence telle que ces courants circulent superficiellement.

Cette gamme de fréquence peut également être déterminée par analyse par le micro-ordinateur après un balayage en fréquences sur toute la gamme disponible appliquée sur le matériau ou une pièce avec placage, qui dans ce dernier cas sélectionne lui-même la gamme de fréquence requise pour le test à l'intérieur de la gamme de balayage disponible du système de test à courants de Foucault.

Donc, en comparant des échantillons prélevés et mémorisés avec un matériau sans placage et avec un matériau plaqué, cette comparaison étant effectuée par le micro-ordinateur 1 ou par l'opérateur lorsque le micro-ordinateur affiche sur le dispositif d'affichage 34 ces échantillons sous forme de graphique de l'amplitude et de la différence de phase en fonction de la profondeur de pénétration des courants de Foucault, il est possible de mesurer l'épaisseur du placage très précisément. Evidemment, l'étalonnage peut être effectué de façon théorique ou expérimentale.

Deux applications ont été décrites ci-haut cependant, il est évident que le principe de balayage en fréquences permet une versatilité jamais atteinte pour un dispositif de test non destructif à courants de Foucault, qui permet une application très étendue d'un tel système, en modifiant lorsque nécessaire le logiciel d'opération du micro-ordinateur.

En dernier lieu, il convient de mentionner que le clavier 33 et le dispositif d'affichage 34 de la Figure 1 pourraient éventuellement être remplacés par un appareil 35 (Figure 1) muni d'un écran vidéo cathodique sur lequel le micro-ordinateur 1 affiche des choix relatifs aux paramètres de fonctionnement et à l'application du système de test à courants de Foucault.

Plutôt que de contrôler le dispositif par l'intermédiaire du clavier 33, un crayon sélecteur 36 associé à l'appareil 35 pourrait être utilisé pour sélectionner directement sur l'écran de cet appareil 35 le mode d'opération du dispositif de test en appliquant le crayon 36 sur les cases appropriées, telles que 37. Ce genre de sélection sur écran cathodique est bien connu et par conséquent ne sera pas élaboré davantage. L'écran de l'appareil 35 serait également utilisé dans ce cas pour l'affichage des résultats relatifs aux différents tests.

**Revendications**

1. Dispositif de test non destructif à courants de Foucault comprenant:

un générateur sinusoïdal (4, 5, 8) délivrant un signal d'excitation à une certaine fréquence réglable,

une sonde (11) comprenant un enroulement (43, 46) apte à recevoir une pièce à tester, cet enroulement recevant ledit signal d'excitation, cette sonde délivrant un signal de mesure à ladite fréquence,

des moyens (12, 13, 14) pour mesurer la différence de phase entre le signal d'excitation et le signal de mesure,

des moyens (17) pour mesurer l'amplitude du signal de mesure, caractérisé en ce qu'il comprend en outre:

un convertisseur analogique/numérique (2) ayant une entrée reliée au détecteur de phase (12, 13, 14) et au moyen de mesure de l'amplitude (17),

un microordinateur (1) relié au convertisseur (2) et au générateur sinusoïdal (5) et associé à des moyens de commande d'affichage (33, 34, 35, 36), ce microordinateur étant apte, avec un logiciel de travail approprié, à:

modifier la fréquence du signal engendré par le générateur sinusoïdal (5) pour balayer une certaine plage de fréquences,

échantillonner les signaux délivrés par les moyens (12, 13, 14) de mesure de la différence de phase et le moyen (12) de mesure de l'amplitude du signal, cet échantillonnage s'effectuant pour différentes valeurs de la fréquence du signal engendré par le générateur,

mémoriser tous ces échantillons pour toute la plage balayée à la fois pour une première mesure, dite de référence, effectuée en plaçant une pièce de référence dans la sonde et pour une seconde mesure, dite de test, effectuée en plaçant une pièce de test dans la sonde, cette pièce de test possédant un certain paramètre à évaluer,

déterminer la fréquence de la bande balayée pour laquelle la mesure de référence et la mesure de test présentent la différence la plus accentuée,

réitérer éventuellement cette détermination pour d'autres pièces test possédant d'autres types de paramètres à évaluer et déterminer, à chaque fois, la valeur de la fréquence la mieux appropriée pour mesurer chaque paramètre,

régler alors le générateur (4, 5, 8) sur l'une des fréquences ainsi déterminées pour effectuer des tests subséquents sur d'autres pièces censées présenter l'un desdits paramètres.

2. Dispositif selon la revendication 1, caractérisé par le fait que le microordinateur est apte à faire balayer la fréquence du générateur par sauts, en arrêtant la fréquence sur une pluralité de valeurs discrètes situées dans ladite plage.

3. Dispositif selon la revendication 1, caractérisé par le fait qu'il comprend des moyens (34) pour afficher, en fonction de la profondeur de pénétration des courants de Foucault dans la pièce à analyser, les variations de l'amplitude du signal de mesure et de la différence de phase.

4. Dispositif selon la revendication 1, caractérisé par le fait qu'il comprend en outre une première boucle de rétroaction comprenant un convertisseur numérique-analogique (20) relié au microordinateur, un soustracteur (15) ayant une entrée négative reliée au convertisseur et une entrée positive reliée au détecteur de phase (14).

5. Dispositif selon la revendication 1, caractérisé par le fait qu'il comprend une seconde boucle de rétroaction comprenant un convertisseur numérique-analogique (21) et un sommateur (18) possédant une entrée négative reliée au convertisseur et une entrée positive reliée au moyen (17) de mesure de l'amplitude.

6. Dispositif selon l'une quelconque des revendications précédentes, caractérisé par le fait que la sonde (11) comprend au moins un détecteur magnétorésistif (44, 47, 48) placé à l'une des extrémités de l'enroulement de la sonde et délivrant le signal de mesure.

7. Dispositif selon la revendication 6, caractérisé par le fait que la sonde comprend deux détecteurs magnétorésistifs (47, 48) placés respectivement aux deux extrémités de l'enroulement (46), ces deux détecteurs étant reliés aux deux entrées d'un détecteur différentiel (49) dont la sortie (50) délivre le signal de mesure.

**Patentansprüche**

1. Vorrichtung zur zerstörungsfreien Prüfung mit Hilfe von Wirbelströmen, enthaltend:
einen Sinusgenerator (4, 5, 8), der ein Erregungssignal mit einer bestimmten einstellbaren Frequenz liefert,
eine Sonde (11) mit einer Spule (43, 46), die dazu bestimmt ist, ein zu prüfendes Teil aufzunehmen und die das genannte Erregungssignal empfängt, wobei die Sonde ein Meßsignal mit der genannten Frequenz abgibt,
Einrichtungen (12, 13, 14) zum Messen der Phasendifferenz zwischen dem Erregungssignal und dem Meßsignal,
Einrichtungen (17) zum Messen der Amplitude des Meßsignals,
dadurch gekennzeichnet, daß sie weiterhin enthält:
einen Analog/Digital-Wandler (2), der einen Eingang aufweist, der mit dem Phasendetektor (12, 13, 14) und mit der Amplitudenmeßeinrichtung (17) verbunden ist,
einen Microcomputer (1), der mit dem Wandler (2) und mit dem Sinusgenerator (5) verbunden ist und der Anzeigesteuerungseinrichtungen (33, 34, 35, 36) zugeordnet ist und der dazu bestimmt ist, zusammen mit geeigneter Arbeitssoftware:
die Frequenz des von dem Sinusgenerator (5) abgegebenen Signals zu verändern, um einen gewissen Frequenzbereich zu überstreichen,
die von den Phasenmeßeinrichtungen (12, 13, 14) und der Signalamplitudenmeßeinrichtung (12) gelieferten Signale abzutasten, wobei sich diese Abtastung bei verschiedenen Frequenzen des von dem Generator abgegebenen Signals vollzieht,
alle diese Abtastwerte für den gesamten Frequenzbereich, der für eine erste Messung, genannt Bezugsmessung, überstrichen wird, auf einmal zu speichern, wobei diese Messung ausgeführt wird, indem ein Bezugsteil in der Sonde angeordnet wird, und für eine zweite, Testmessung genannte Messung zu speichern, die ausgeführt wird, indem ein Testteil in der Sonde angeordnet wird, wobei dieses Testteil einen gewissen, zu ermittelnden Parameter besitzt,
die Frequenz des überstrichenen Frequenzbands zu bestimmen, mit dem die Bezugsmessung und die Testmessung die ausdrucksstärkste Differenz zeigen,
gegebenenfalls diese Bestimmung für andere Testteile zu wiederholen, die andere zu ermittelnde Parameterarten aufweisen, und jedes Mal den für die Messung jedes Parameters geeignetste Frequenz zu ermitteln,
und dann den Generator (4, 5, 8) auf eine der so ermittelten Frequenzen einzustellen, um nachfolgende Tests an anderen Teilen auszuführen, die als einen der genannten Parameter aufweisend angesehen werden.

2. Vorrichtung nach Anspruch 1, dadurch gekennzeichnet, daß der Microcomputer dazu eingerichtet ist, die Frequenz des Generators in Sprüngen zu verschieben, indem die Frequenz an einer Vielzahl diskreter Werte, die in dem genannten Bereich liegen, angehalten wird.

3. Vorrichtung nach Anspruch 1, dadurch gekennzeichnet, daß sie Einrichtungen (34) aufweist, die in Abhängigkeit von der Eindringtiefe der Wirbelströme in das zu untersuchende Teil die Meßsignalamplitudenänderungen und die Phasendifferenzänderungen anzeigen.

4. Vorrichtung nach Anspruch 1, dadurch gekennzeichnet, daß sie weiterhin eine erste Rückkopplungsschleife aufweist, die einen Digital/Analog-Wandler (20) enthält, der mit dem Microcomputer verbunden ist, sowie einen Subtrahierer (15), der einen negativen Eingang hat, der mit dem Wandler verbunden ist, und einen positiven Eingang hat, der mit dem Phasendetektor (14) verbunden ist.

5. Vorrichtung nach Anspruch 1, dadurch gekennzeichnet, daß sie eine zweite Rückkopplungsschleife enthält, die einen Digital/Analog-Wandler (21) und einen Summierer (18) enthält, der einen negativen Eingang hat, der mit dem Wandler verbunden ist, und einen positiven Eingang hat, der mit der Amplitudenmeßeinrichtung (17) verbunden ist.

6. Vorrichtung nach einem der vorhergehenden Ansprüche, dadurch gekennzeichnet, daß die Sonde (11) zwei magnetoresistive Detektoren (47, 48) enthält, die jeweils an den zwei Enden der Spule (46) angeordnet sind und die mit den zwei Eingängen eines Differenzdetektors (49) verbunden sind, dessen Ausgang (50) das Meßsignal liefert.

7. Vorrichtung nach Anspruch 6, dadurch gekennzeichnet, daß die Sonde zwei magnetoresistive Detektoren (47, 48) enthält, die jeweils an den zwei Enden der Spule (46) angeordnet und die mit zwei Eingängen eines Differenzdetektors (49) verbunden sind, dessen Ausgang (50) das Meßsignal liefert.

**Claims**

1. Non-destructive test device using eddy currents comprising:

a sinusoidal generator (4, 5, 8) supplying an excitation signal at a certain adjustable frequency,

a probe (11) comprising a winding (43, 46) capable of receiving a part to be tested, this winding receiving the said excitation signal, this probe supplying a measurement signal at the said frequency,

means (12, 13, 14) for measuring the phase difference between the excitation signal and the measurement signal,

means (17) for measuring the amplitude of the measurement signal, characterized in that it furthermore comprises:

an analog/digital converter (2) having an input connected to the phase detector (12, 13, 14) and to the amplitude measuring means (17),

a microcomputer (1) connected to the converter (2) and to the sinusoidal generator (5) and associated with means of display control (33, 34, 35, 36), this microcomputer being capable, with an appropriate operating software, of:

modifying the frequency of the signal generated by the sinusoidal generator (5) in order to scan a certain frequency range,

sampling the signals delivered by the means (12, 13, 14) of measuring the phase difference and the means (12) of measuring the amplitude of the signal, this sampling being carried out at different values of the frequency of the signal generated by the generator,

storing all of these samples for the entire scanned range both for a first measurement, called the reference measurement, carried out by placing a reference part in the probe, and for a second measurement, called the test measurement, carried out by placing a test piece in the probe, this test piece having a certain parameter to be evaluated,

determining the frequency in the scanned range at which the reference measurement and the test measurement exhibit the greatest difference,

possibly repeating this determination for other test pieces having other types of parameters to be evaluated and determining, each time, the value of the frequency most appropriate for measuring each parameter,

then adjusting the generator (4, 5, 8) to one of the frequencies thus determined in order to perform subsequent tests on other parts considered to exhibit one of the said parameters.

2. Device according to Claim 1, characterized in that the microcomputer is capable of making the frequency of the generator scan in jumps while stopping the frequency at a plurality of discrete values contained within the said range.

3. Device according to Claim 1, characterized in that it comprises means (34) for displaying, as a function of the depth of penetration of the eddy currents in the part to be analysed, the variations in the amplitude of the measurement signal and the phase difference.

4. Device according to Claim 1, characterized in that it furthermore comprises a first feedback loop comprising a digital/analog converter (20) connected to the microcomputer, a subtractor (15) having a negative input connected to the converter and a positive input connected to the phase detector (14).

5. Device according to Claim 1, characterized in that it comprises a second feedback loop comprising a digital/analog converter (21) and an adder (18) having a negative input connected to the converter and a positive input connected to the amplitude measuring means (17).

6. Device according to any of the previous claims, characterized in that the probe (11) comprises at least one magnetoresistive detector (44, 47, 48) placed at one of the ends of the winding of the probe and supplying the measurement signal.

7. Device according to Claim 6, characterized in that the probe comprises two magnetoresistive detectors (47, 48) respectively placed at the two ends of the winding (46), these two detectors being connected to the two inputs of a differential detector (49) whose output (50) supplies the measurement signal.

FIG. 1

FIG. 2a

FIG. 2b

DETECTEURS
MAGNETORESISTIFS

FIG. 2c

DETECTEUR
MAGNETORESISTIF